# EUROPEAN PATENT APPLICATION

(11) **EP 2 660 721 A1**
(43) Date of publication of application: **06.11.2013**
(21) Application number: 12305495.9
(22) Date of filing: 03.05.2012
(51) Int. Cl.: G06F 9/445, G06F 21/00, G07F 7/10

(54) **Method of loading an application in a secure device**

(71) Applicant: Gemalto SA, 92190 Meudon (FR)
(72) Inventor: Millet, François, 13705 LA CIOTAT (FR); Roussel, Nicolas, 13705 LA CIOTAT (FR)

(57) **Abstract**

The invention is a method of loading an application in a secure device. The application comprises a first executable code, a static data and a personalized data. The method comprises the following steps of:
- computing a signature of said first executable code,
- seeking if the signature matches another signature corresponding to a second executable code of another application that has been previously loaded into the secure device,
- in case of successful matching, storing the static data and the personalized data associated with a link to said second executable code.

## Description

### (Field of the invention)

The present invention relates to the methods of loading an application in a secure device. It relates particularly to methods of loading applications in a secure device which has limited memory resources.

### (Background of the invention)

Secure devices are devices which are able to deny the access to data stored in their memory if the corresponding rights are not granted. For instance, smart cards or mobile phones are secure devices. A secure device may comprise a plurality of applications which may be installed during the manufacturing step, at a point of sale or on the field.

Many secure devices have limited memory resources. For example, the portable secure devices must generally comply with size constraints that restrict the available memory components. Moreover, the cost of big memory components may be another constraint.

There is a need for optimizing the size of the memory which is allocated for storing an application loaded into a secure device.

### (Summary of the Invention)

An object of the invention is to solve the above mentioned technical problem.

The object of the present invention is a method for loading a first application in a secure device. Said first application comprises a first executable code, a static data and a personalized data. The method comprises the following steps:
- computing a first signature of said first executable code,
- seeking if said first signature matches a second signature corresponding to a second executable code of a second application that has been previously loaded into the secure device,
- in case of successful matching, storing the static data and the personalized data associated with a link to said second executable code into the secure device.

Advantageously, said first executable code may be loaded into the secure device in case of unsuccessful matching only.

Advantageously, said first application may be loaded into the secure device, the computing of said first signature may be performed into the secure device and in case of successful matching, said first executable code may bee removed from the secure device.

Advantageously, in case of unsuccessful matching, said first application and said first signature may be stored in the secure device, said first signature being stored as associated to said first executable code and said first application being stored in the form of the static data, the personalized data and said first executable code.

Advantageously, said first executable code may be updated in the secure device before being stored in the secure device.

Advantageously, the method may comprise the further steps:
- loading an upgrade data dedicated to said first application into the secure device,
- storing the upgrade data into a memory area exclusively associated with said first application, the second executable code remaining unchanged in the secure device.

Another object of the invention is a secure device able to receive a first application comprising a first executable code, a static data and a personalized data. The secure device comprises:
- a computing means adapted to generate a first signature of said first executable code,
- a seeking means adapted to check if said first signature matches a second signature corresponding to a second executable code of a second application that was previously loaded into the secure device,
- a storing means adapted to store the static data and the personalized data associated with a link to said second executable code in case of successful matching.

Advantageously, the storing means may be adapted to remove said first executable code from the secure device in case of successful matching.

Advantageously, the storing means may be adapted to store into the secure device said first application in the form of the static data, the personalized data and said first executable code in case of unsuccessful matching.

Advantageously, the secure device may comprise an object-oriented virtual machine, the static data may comprise a static image, the personalized data may comprise a package AID and said first executable code may be an object-oriented bytecode.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of architecture of a secure device according to the invention;
- Figure 2 illustrates an example of flowchart of method for loading an application in a secure device according to the invention; and
- Figure 3 is an example of two applications stored in the non volatile memory of a secure device according to the invention.

### (Detailed description of the preferred embodiments)

The invention may apply to any types of secure device which are intended to contain several applications. In the following examples, the secure device is a Universal Integrated Circuit Card (UICC) but it could be any other kind of secure devices able to receive an application intended to be stored.

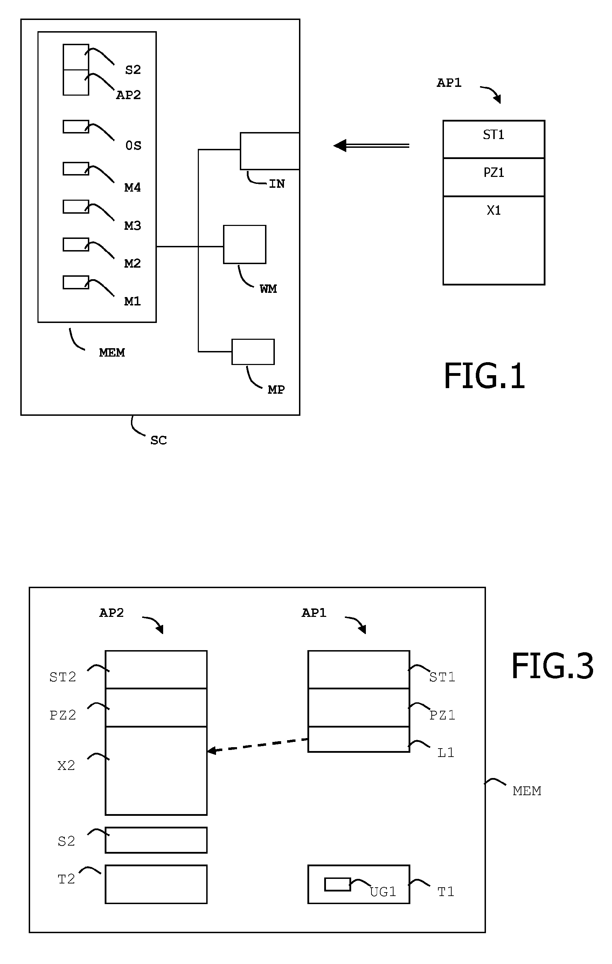

**Figure 1** shows an example of architecture of a secure device SC according to a preferred embodiment of the invention. In this example, the device SC is a UICC.

The secure device SC comprises a working memory WM of RAM (Random Access Memory) type, a non volatile memory MEM, a microprocessor MP and a communication interface IN. The device SC is able to receive an application AP1 through the communication interface IN. The application AP1 may be sent by a connected machine or a distant machine. The application AP1 comprises a static data ST1, a personalized data PZ1 and an executable code X1. ST1 could be static a component of a Javacard application, PZ1 could comprise deployment data such as a package AID of this application.

The non volatile memory MEM comprises an operating system OS, a signature S2, an application AP2, a computing means M1, a seeking meansM2, a storing means M3 and a linking means M4.

In a preferred embodiment, the operating system OS comprises a Java Virtual Machine and the application AP1 is an applet. In this case, the status data ST1 may be a static image, the personalized data PZ1 may be an AID (Application Identifier) and the executable code X1 may be a code interpretable by the Virtual Machine.

The computing means M1 is capable to generate a signature S1 of the executable code X1. For instance the computing means M1 may use a hash function to generate S1. Alternatively, the computing means M1 may use any other kind of algorithms allowing to generate a signature with or without a key. For instance, the computing means M1 may use CMAC (Cipher-based MAC), HMAC (Hash-based MAC) or XOR.

If the used algorithm needs a key, this key may be advantageously generated and stored in the device SC only. (I.e. without going outside the secure device SC.)

The seeking means M2 is adapted to check if the secure device comprises another signature which matches the signature S1. The seeking means M2 search for a matching signature among a memory area dedicated to storing signatures of executable codes belonging to applications that were previously loaded into the secure device SC.

The storing means M3 is adapted to store the application AP1 as a set made of the static data ST1 and the personalized data PZ1 associated with a link to the executable code corresponding to the found signature in case of successful matching.

In the example of Figure 1, the storing means M3 is adapted to remove said the executable code X1 from the secure device SC in case of successful matching.

In the example of Figure 1, the storing means M3 is adapted to store the application AP1 as a set made of the static data ST1, the personalized data PZ1 and the executable code X1, in case of unsuccessful matching.

The linking means M4 is adapted to update the executable code X1 before storing this executable code X1 into the secure device SC.

Typically, the linking means M4 is capable to change the value of the executable code X1 by running a link operation as defined in Java domain.

Alternatively, the linking means M4 may be able to perform the linking operation at each runtime.

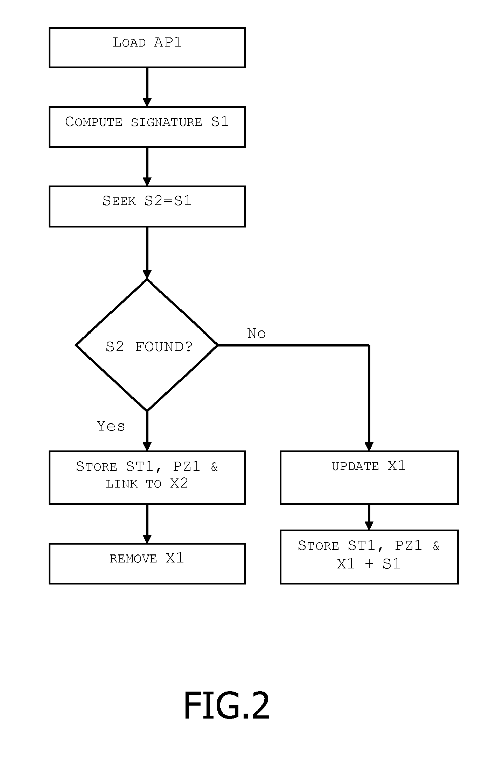

**Figure 2** illustrates an example of flowchart of method for loading the application AP1 in the secure device SC according to one embodiment of the invention. The application AP1 and the secure device SC are similar to those described at Figure 1.

At first step the secure device SC receives the application AP1. For instance, the application AP1 may be downloaded in the device SC through an over-the-air session or through an Internet session. If needed, the loaded executable code X1 is deciphered in the secure device.

At a second step, a signature S1 is computed from the executable code X1 of the application AP1. This signature S1 is generated by using the executable code X1 like received. In other words, the executable code X1 is not updated before computing the signature S1. The signature is computed in the secure device SC.

At a third step, a search is started for identifying a signature S2 already stored into the device SC which matches the computed signature S1. The search is carried out by scanning the signatures corresponding to executable code of applications previously stored in the device SC. In a preferred embodiment, the matching test corresponds to the comparison of the value of each stored signature.

If a matching signature S2 is found, the application AP1 is stored in the secure device SC in the form of a set composed of the status data ST1, the personalized data PZ1 and a link to the executable code X2 associated to the signature S2. The signature S2 is assumed to have been computed from the executable code X2 such as loaded in the device SC. In other words, the executable code X2 has not been updated (by a linking operation for example) before the generation of the signature S2.

According to the principle of the invention, the loaded application shares the executable code of another application which has been already stored into the secure device SC.

In a further step the executable code X1 is removed from the secure device SC if a matching signature has been found.

If no matching signature is found, the application AP1 is stored in the secure device SC in the form of a set composed of the status data ST1, the personalized data PZ1 and the executable code X1. In addition the computed signature S1 is stored in the secure device SC and associated to the executable code X1 (or to the application AP1). Moreover, the executable code X1 may be updated before (for example by a linking operation) before being stored in the in the secure device SC. In other words, the stored executable code X1 may be different from the executable code used for computing the signature S1.

**Figure 3** shows an example of two applications AP1 and AP2 stored in the memory MEM of the secure device SC. The example of Figure 3 illustrates the case where a successful matching signature has been found when loading the application AP1. The Application AP2 is stored in the form of a static data ST2, a personalized data PZ2 and an executable code X2. Additionally, the signature S2 is associated to the application AP2 and is stored in the non volatile memory MEM of the secure device SC.

The application AP1 is stored in the form of a static data ST1, a personalized data PZ1 and link L1 to the executable code X2. Thanks to the invention, a size equivalent to the size of the executable code X1 is saved in the memory MEM.

Advantageously, the memory MEM may comprise a specific area dedicated to store upgrade data that is intended to modify the behavior of a targeted application. The specific area is exclusively associated to the targeted application. The upgrade data is an executable data which is intended to change the initial execution code of a stored application. For example, a patch loaded for fixing a bug is an upgrade data. A package containing upgrade related to a new version of an application is another example of upgrade data.

As shown at Figure 3, a specific area T1 is associated to the application AP1 and another specific area T2 is associated to the application AP2. An upgrade data UG1 has been loaded into the secure devices SC and stored into the specific area T1. The upgrade data UG1 targets the application AP1.

When the application AP1 is executed by the operating system OS of the secure device SC, the executable code X2 is run by taking the upgrade data UG1 into account. The operating system OS is adapted to combine both the upgrade data UG1 and the executable code X2 when running the application AP1. When the specific area T2 associated to the application AP2 is empty, the operating system OS runs the application AP2 by using the executable code X2 as if no update was available.

The specific area allows adapting the behavior of the stored applications individually even if they share a same executable code.

It is to be noted that the executable code of an application may be stored in the memory MEM without any update compared with the executable code received during the loading of an application. In such a case the executable code stored in the memory MEM is identical to the executable code received from the outside.

Starting from the example of Figure 3, the application AP2 may be removed from the secure device SC. In this case, the device SC is able to detect that there is a link towards the executable code X2. Consequently, the executable code X2 is kept into the memory MEM and the static data ST2 and personalized data PZ2 may be erased.

The wording "executable code" must be understood as a code which may be interpreted by a virtual machine or directly executed in the secure device.

The invention is well-suited for managing several applications which have the same executable code and have diversified deployment data, such as different AID of different picture/image. In particular, the invention applies to load applications which have been designed as stand-alone applications and were not specifically designed to share their executable code.

An advantage of the invention is to provide a solution which remains fully compatible with the existing scheme of application deployment. All treatments specific to the invention are performed into the secure device.

In another embodiment of the invention, the signature S1 may be computed outside the secure device SC. For example, a server may comprise the application AP1 and a computing means similar to the computing means M1 described at Figure 1. In this case, the computed signature S1 is sent by the server to the secure device. Then the secure device checks if the received signature S1 matches a signature corresponding to an executable code of an application already stored in the secure device. The result of the checking step is sent to the server. Depending on this result, the server sends either the whole application AP1 or only a part of the application AP1 (i.e. the static data ST1 and the personalized data PZ1) to the secure device. This embodiment allows saving the bandwidth between the server and the secure device. Alternatively, the computed signature S1 may be sent by the server to the secure device with the whole application. Then the secure device checks if the received signature S1 matches a signature corresponding to an executable code of an application already stored in the secure device. Depending on this result, the secure device stores either the whole application or only a part of the received application (i.e. the static data ST1 and the personalized data PZ1). This embodiment allows reducing the workload required for the server since the number of messages exchanged between the server and the secure device is limited.

## Claims

1. A **method** for loading a first application (AP1) in a secure device (SC), said first application (AP1) comprising a first executable code (X1), a static data (ST1) and a personalized data (PZ1), **characterized in that** the method comprises the following steps:
- computing a first signature (S1) of said first executable code (X1),
- checking if said first signature (S1) matches a second signature (S2) corresponding to a second executable code (X2) of a second application (AP2) that has been previously loaded into the secure device (SC),
- in case of successful matching, storing the static data (ST1) and the personalized data (PZ1) associated with a link (L1) to said second executable code (X2).

2. A method according to claim 1, wherein said first executable code (X1) is loaded into the secure device (SC) in case of unsuccessful matching only.

3. A method according to claim 1, wherein said first application (AP1) is loaded into the secure device (SC), wherein the computing of said first signature (S1) is performed into the secure device (SC) and wherein in case of successful matching, said first executable code (X1) is removed from the secure device (SC).

4. A method according to claim 1, wherein, in case of unsuccessful matching, said first application (AP1) and said first signature (S1) are stored in the secure device (SC), said first signature (S1) being stored as associated to said first executable code (X1) and said first application (AP1) being stored in the form of the static data (ST1), the personalized data (PZ1) and said first executable code (X1).

5. A method according to claim 4, wherein said first executable code (X1) is updated in the secure device (SC) before being stored in the secure device (SC).

6. A method according to claim 1, wherein the method comprises the further steps:
- loading an upgrade data (UG1) dedicated to said first application (AP1) into the secure device (SC),
- storing the upgrade data (UG1) into a memory area (T1) exclusively associated with said first application (AP1), the second executable code (X2) remaining unchanged in the secure device (SC).

7. A **secure device** (SC) able to receive a first application (AP1) comprising a first executable code (X1), a static data (ST1) and a personalized data (PZ1), **characterized in that** the secure device comprises:
- a computing means (M1) adapted to generate a first signature (S1) of said first executable code (X1),
- a seeking means (M2) adapted to check if said first signature (S1) matches a second signature (S2) corresponding to a second executable code (X2) of a second application (AP2) that was previously loaded into the secure device (SC),
- a storing means (M3) adapted to store the static data (ST1) and the personalized data (PZ1) associated with a link (L1) to said second executable code (X2) in case of successful matching.

8. A secure device (SC) according to claim 7, wherein the storing means (M3) is adapted to remove said first executable code (X1) from the secure device (SC) in case of successful matching.

9. A secure device (SC) according to claim 7, wherein the storing means (M3) is adapted to store into the secure device said first application (AP1) in the form of the static data (ST1), the personalized data (PZ1) and said first executable code (X1) in case of unsuccessful matching.

10. A secure device (SC) according to claim 7, wherein the secure device (SC) comprises an object-oriented virtual machine, wherein the static data (ST1) comprises a static image, wherein the personalized data (PZ1) comprises a package AID and wherein said first executable code (X1) is an object-oriented bytecode.
